# EUROPÄISCHE PATENTSCHRIFT

(11) **EP 2 714 516 B1**
(45) Veröffentlichungstag und Bekanntmachung des Hinweises auf die Patenterteilung: **21.12.2016**
(21) Anmeldenummer: 12753052.5
(22) Anmeldetag: 24.05.2012
(51) Int. Cl.: B64D 15/12

(54) **VERBUNDSTRUKTUR MIT EISSCHUTZVORRICHTUNG SOWIE HERSTELLVERFAHREN**
COMPOSITE STRUCTURE HAVING AN ICE PROTECTION DEVICE, AND PRODUCTION METHOD
STRUCTURE COMPOSITE COMPORTANT UN DISPOSITIF DE PROTECTION CONTRE LE GIVRE ET PROCÉDÉ POUR SA FABRICATION

(30) Priorität: 26.05.2011 DE 102011103297
(43) Veröffentlichungstag der Anmeldung: 09.04.2014
(73) Patentinhaber: Airbus Defence and Space GmbH, 85521 Ottobrunn (DE)
(72) Erfinder: STEINWANDEL, Jürgen, 88690 Uhldingen (DE); ENGLHART, Martin, 83104 Schönau (DE); JONKE, Dietrich, P., 82024 Taufkirchen (DE); PIRINGER, Helmut, 85667 Oberpframmern (DE)
(74) Vertreter: Kastel, Stefan
(86) Internationale Anmeldenummer: PCT/DE2012/000535
(87) Internationale Veröffentlichungsnummer: WO 2012/159608

(56) Entgegenhaltungen:
- EP-A1- 0 872 417
- WO-A1-99/15405
- GB-A- 2 252 285
- US-A- 5 925 275
- US-A1- 2007 210 073
- US-A1- 2011 024 409
- US-A1- 2011 114 895

## Beschreibung

Die Erfindung betrifft eine Verbundstruktur für ein Luftfahrzeugbauteil zum Bilden eines Strukturelements eines Luftfahrzeuges. Weiter betrifft die Erfindung ein Herstellverfahren hierfür.

Die Erfindung befasst sich insbesondere mit dem Problem der Eisbildung an Luftfahrzeugen und betrifft somit auch das Gebiet von Eisschutzvorrichtungen, welche Vorrichtungen zur Vermeidung von Eisbildung an Luftfahrzeugen und Vorrichtungen zur Enteisung von Luftfahrzeugen beinhalten.

Eis bildet sich an Vorderkanten von Flügeln, Leitwerken und horizontalen Stabilisatoren, wenn ein Luftfahrzeug, wie beispielsweise ein Flugzeug oder ein Hubschrauber, durch eine Wolke fliegt, die unterkühlte Wassertröpfchen enthält. Das Eis bildet sich, da die unterkühlten Wassertröpfchen aus Wolken das Luftfahrzeug berühren. Diese Berührung bringt Energie in die Tröpfchen ein und bringt sie dazu, aus dem flüssigen Zustand in den festen Zustand zu wechseln und somit zu Eis zu werden. Wenn eine Eisschicht wächst, beeinträchtigt sie die Luftströmung über der betroffenen Oberfläche. Wenn die Schicht groß genug wird, kann sie Tragprobleme oder Handhabungsprobleme für das Luftfahrzeug bewirken, was im schlimmsten Fall zum Strömungsabriss und zum Verlust des Auftriebs führen kann.

Unter Enteisung (englisch: de-icing) wird der Prozess des Entfernens von gefrorenen Stoffansammlungen wie Schnee oder Eis von einer Oberfläche verstanden.

Unter Vermeiden einer Eisbildung (englisch: anti-icing) wird der Prozess des Schutzes gegen die Bildung von gefrorenen Stoffansammlungen wie Schnee oder Eis auf einer Oberfläche verstanden.

Üblicherweise werden Enteisungsverfahren und Verfahren zur Vermeidung einer Eisbildung auf dem Boden durchgeführt und umfassen mechanische Methoden und das Enteisen mittels Infrarotstrahlung, das Aufbringen von trockenen oder flüssigen Chemikalien, von Salz, Alkoholen, oder erhitzten Glykol-Verbindungen oder Glykol-Lösungen durch Sprühen.

Z.B. wird auch eine Schutzschicht aus Eisvermeidungsflüssigkeit für einen begrenzten Schutz aufgetragen. Hierzu werden insbesondere bei kalten Witterungen Flugzeuge oder sonstige Luftfahrzeuge insbesondere vor dem Start enteist. Das Enteisen von Flugzeug-Tragflächen sowohl am Boden (vor dem Flug) als auch während des Fluges ist höchst sicherheitsrelevant, da es ansonsten durch Eisbildung zum Strömungsabriss während des Fluges kommen kann und das Flugzeug absturzgefährdet ist.

Eisschutzsysteme zum Vermeiden einer Eisbildung während des Fluges umfassen das Leiten von heißer Abzweigluft aus den Triebwerken durch innere Leitungen entlang der Flügelkante oder das Aufbringen zusätzlicher Heizungselemente, die in Gummilagen eingebettet sind und auf die Führungskanten von Luftfahrzeugbauteilen, wie Tragflächen oder Propeller und Hubschrauberrotorblätter außen angebracht werden.

Es gibt auch elektro-mechanische Eisschutzsysteme, wozu die sog. "Weeping wing"-Systeme zählen, bei denen eine Glykol-basierte Eisschutzflüssigkeit durch schmale Öffnungen in dem Flügelprofil gepumpt wird. Weitere elektro-mechanische Eisschutzsysteme umfassen die sog. EMEDS-Systeme, die eine mechanische Kraft dazu nutzen, das Eis von der Flugoberfläche zu klopfen. Typischerweise sind dabei Aktuatoren unter der Haut der Struktur installiert. Der Aktuator wird zum Induzieren einer Schockwelle in der geschützten Oberfläche bewegt. Es gibt auch hybride Systeme, die ein solches Eisabsprengsystem mit elektrischen Heizelementen kombinieren.

Bekannte Eisschutzsysteme werden im Folgenden kurz erläutert:
Pneumatische Enteisungsprofile, welche Eis durch mittels Luftdruck induzierten Oberflächenbewegungen entfernen, können nur für langsame Luftfahrzeuge eingesetzt werden.

Weit verbreitet sind die sog. "Bleed air"-Systeme, wo Heißluft aus den Triebwerken abgezweigt und zum Enteisen oder zur Vermeidung von Eisbildung genutzt werden. Die Abzweigtemperatur ist aber in der Regel zu hoch für aus Verbundmaterialien, wie CFK-Strukturen, gebildete Luftfahrzeugbauteile. Aufgrund der Abzweigung der Heißluft wird die Effizienz des Triebwerkes verringert.

Die in Gummilagen eingebetteten Heizelemente haben Nachteile hinsichtlich einer geringen elektrischen Wirksamkeit, hinsichtlich eines hohen Gewichts und hinsichtlich der Anbringung der Heizelemente. Die Heizelemente können sich während des Fluges von dem Luftfahrzeug trennen. Derartige Heizelemente können nicht auf beliebige Oberflächenstrukturen angebracht werden; d.h. die Freiheit bei der Gestaltung von zu schützenden Oberflächen ist stark eingeschränkt. Die Heizoberflächen haben eine geringe Lebensdauer. Derartige Eisschutzsysteme bedingen hohe Herstell- und Wartungskosten und sind auch nicht für kleine Luftfahrzeugbauteile, wie z.B. Staudrucksensoren oder dergleichen, geeignet.

Die Weeping wing-Systeme verbrauchen andauernd Fluide während des Fluges, benötigen Düsen an der Flugvorderkante und sind umweltbelastend. Sie sind wartungsintensiv und bedingen hohes Gewicht, da die Flüssigkeit nachgefüllt und mitgeführt werden muss.

Die EMEDS-Systeme haben Nachteile hinsichtlich ihres hohen Gewichts und hinsichtlich der Notwendigkeit einer speziellen Anpassung von Verbundstrukturen an die Aktuatoren und deren Klopfbewegungen. Es wird eine Enteisungssteuereinheit und eine Energiespeichereinheit benötigt. Außerdem können solche Systeme nicht die Eisbildung vermeiden, sondern nur aufgebautes Eis entfernen. Das entfernte Eis kann während des Fluges Triebwerksrotoren beschädigen oder zerstören.

Aus der US 2007/0210073 A1 ist eine Verbundstruktur für Luftfahrzeuge mit einer Schutzvorrichtung bekannt, wobei ein Heizelement für eine Einlauflippe eines Flugzeugtriebwerkes aus einer Verbundstruktur mit einer elektrisch leitfähigen Schicht, die aus Graphit gebildet sein kann, und einer elektrisch isolierenden Außenschicht, die aus Glasfaserverbundmaterial gebildet sein kann, vorgesehen ist. Dieser Schichtaufbau kann auf einer Tragstuktur aus gestapeltem vorimprägnierten Glas-Epoxid-Gewebeschichten gebildet sein. Die bekannte Verbundstruktur kann Schallschutzeigenschaften aufweisen.

Aus der US 2011/0114895 A1 ist ein Faserverbundbauteil für ein Luftfahrzeug auf Basis einer CFRP-Verbundstruktur mit einer Eisschutzvorrichtung bekannt, wobei Kohlenstofffasern oder Glasfasern mit Metallmaterial beschichtet sind.

In der WO 99/15405 ist ein Laminat mit einer Blähgraphitschicht als leitfähige Schicht zum Bilden eines Eisschutzsystems für eine Luftfahrzeugoberfläche vorgesehen.

Aus der US 5 925 275 ist ein Eisschutzsystem für ein Luftfahrzeug bekannt, bei der eine nicht gewebte Faserschicht aus durch Metallbeschichtung leitfähigen Fasern zwischen Glasfaserverbundschichten eingebettet ist.

Aus der EP 0 872 417 A1 ist eine Eisschutzvorrichtung auf einer Unterstruktur vorgesehen. Die Eisschutzvorrichtung besteht aus einer Haut, einer Hautbiegeeinrichtung und einer Hautheizeinrichtung. Darauf kann eine Erosionsschutzschicht aufgebracht werden, die aus Kunststoff, Titanfolie, PEK-Folie, PU-Folie oder aus PU-Lack bestehen kann.

Der Erfindung liegt die Aufgabe zugrunde, eine verbesserte Eisschutzvorrichtung für ein Luftfahrzeug zu schaffen.

Diese Aufgabe wird durch eine Verbundstruktur nach Anspruch 1 gelöst.

Ein Verfahren zum Herstellen einer solchen Struktur ist Gegenstand des Nebenanspruches.

Vorteilhafte Ausgestaltungen sind Gegenstand der Unteransprüche.

Die Erfindung schafft eine Verbundstruktur für ein Luftfahrzeugbauteil zum Bilden eines Strukturelements eines Luftfahrzeuges mit einer in der Verbundstruktur integrierten Eisschutzvorrichtung zur Vermeidung einer Eisbildung und/oder zur Enteisung, wobei die Eisschutzvorrichtung ein flächenhaftes elektrisches Heizelement aufweist, das unterhalb einer äußeren Schicht einer Außenoberfläche des Luftfahrzeugbauteiles in die Verbundstruktur eingebettet ist. Weiter ist eine Latentwärmespeicherschicht mit einem durch Phasenübergang latent Wärme speicherndem Material vorgesehen.

Demnach ist erfindungsgemäß in eine Verbundstruktur zum Aufbauen eines Luftfahrzeugbauteiles eine Heizung mit integriert. Hierzu wird ein flächiges elektrisches Heizelement unterhalb einer Schutzschicht, wie beispielsweise eines Decklacks, angebracht und somit in die Verbundstruktur eingebettet.

Es ist bevorzugt, dass das elektrische Heizelement ausgewählt ist aus einer Gruppe von Heizelementen, die
- ein textiles Flächengebilde aus elektrisch leitfähigen Fasern,
- eine leitfähige Schicht aus mit Kohlenstofffasern verstärktem Graphit,
- eine Kunststoffschicht, die durch Graphitfüllung elektrisch leitfähig gefertigt ist,
- eine leitfähige Schicht aus Matrixmaterial, welches mit Nanotubes beladen ist, und
- eine Schicht mit wenigstens einem aus Nanotubes, die über die Fläche der Schicht verteilt aneinandergereiht sind, gebildeten Leitpfad
enthält.

Besonders bevorzugt wird das Heizelement als textiles Flächengebilde ausgebildet, das in die Verbundstruktur leicht eingebettet werden kann. Vorzugsweise weist das textile Flächengebilde ein Kohlenstoff-Vlies auf. Ein solches Flächengebilde kann von Matrixmaterial oder Deckschichtmaterial beim Auftragen durchdrungen werden und somit fast in die Verbundsstruktur integriert werden.

Die äußere Schicht ist vorzugsweise ein hochstabiles thermoplastisches Material. Besonders geeignet sind hierfür Polyetherketone, beispielsweise eine Polyether-Etherketon-Schicht (PEEK). Solche Materialien sind einerseits gut formbar, anderseits im flüssigen Zustand aufbringbar und dennoch ausreichend temperaturfest, um das Heizelement darin einzubetten.

Die Verbundstruktur weist vorzugsweise als Substat ein kohlenstofffaserverstärktes Kunststoffmaterial auf, welches die Tragstruktur für das Luftfahrzeugbauteil, welches vor Eisbildung zu schützen ist bzw. zu enteisen ist, bildet.

Vorzugsweise ist das Heizelement über eine elektrisch isolierende Schicht mit diesem Substrat verbunden. Dies kann beispielsweise eine Isolierschicht aus einem Epoxid-Material sein.

Dadurch, dass eine Latentwärmespeicherschicht ebenfalls mit in das Verbundstruktursystem eingebunden wird, lässt sich Wärme des Heizelementes in der Wärmespeicherschicht speichern, so dass auch nach Ausschalten des Heizelements keine Eisbildung auftritt. Hierzu wird vorzugsweise eine Latentwärmespeicherschicht mit einem Material verwendet, welches durch Phasenübergang Wärme speichern kann.

Weiter schafft die Erfindung ein Luftfahrzeugbauteil zum Bilden eines Strukturelements eines Luftfahrzeuges mit einer in der Verbundstruktur integrierten Eisschutzvorrichtung zur Vermeidung einer Eisbildung und/oder zur Enteisung, wobei die Eisschutzvorrichtung ein flächenhaftes elektrisches Heizelement aufweist, das unterhalb einer äußeren Schicht einer Außenoberfläche des Luftfahrzeugbauteiles in die Verbundstruktur eingebettet ist.

Die elektrische Kontaktierung des Heizelements erfolgt über mindestens ein Kontaktelement, das unterhalb einer äußeren Schicht einer Außenoberfläche des Luftfahrzeugbauteiles in die Verbundstruktur eingebettet ist. Bevorzugt ist das Kontaktelement ein thermisch gespritzter Kontaktstreifen, der mit dem Heizelement elektrisch verbunden ist.

Bevorzugt ist das Heizelement modular aufgebaut und umfasst mehrere flächenhafte Heizelemente. Die elektrische Kontaktierung erfolgt über mindestens ein Kontaktelemente für alle Heizelemente gemeinsam oder für jedes Heizelement separat.

Vorzugsweise weist das Verfahren die Schritte auf:
Schaffen eines Substrats aus faserverstärktem Verbundmaterial, insbesondere CFC-Material,
Aufbringen einer elektrisch leitfähigen Schicht zum Bilden des Heizelements, Beschichten der elektrisch leitfähigen Schicht mit einer Deckschicht zum Bilden der Außenoberfläche des Luftfahrzeugs.

Aufbringen mindestens eines Kontaktelementes zur elektrischen Kontaktierung der elektrisch leitfähigen Schicht. Bevorzugt erfolgt das Aufbringen des Kontaktelements nach dem Aufbringen der elektrisch leitfähigen Schicht. Bevorzugt wird das Kontaktelement mit einer Deckschicht zum Bilden der Außenoberfläche des Luftfahrzeugs beschichtet.

Vorteilhafterweise wird die elektrisch leitfähige Schicht modular aufgebracht. Bevorzugt wird mindestens ein Kontaktelement zwischen die einzelnen Bereiche der modularen leitfähige Schicht aufgebracht.

Dies erfolgt vorzugsweise derart, dass das Substrat vor dem Aufbringen der elektrisch leitfähigen Schicht mit einem elektrisch isolierenden Material beschichtet wird.

Vorzugsweise ist die elektrisch leitfähige Schicht aus oder mit einem Material gebildet, das ausgewählt ist aus einer Gruppe von Materialien, die
- ein textiles Flächengebilde aus elektrisch leitfähigen Fasern,
- mit Kohlenstofffasern verstärktes Graphit,
- durch Graphitfüllung elektrisch leitfähigen Kunststoff, und
- Nanotubes zum Bilden von elektrisch leitfähigen Pfaden
enthält.

Im Folgenden wird die Erfindung anhand der beigefügten Zeichnungen näher erläutert. Dabei zeigen:
- Fig. 1: zeigt eine schematische Querschnittsdarstellung mit ein Beispiel einer Verbundstruktur, der nicht Teil der Erfindung ist, für ein Bauteil eines Luftfahrzeuges mit einer Eisschutzvorrichtung;
- Fig. 2: eine schematische Darstellung der Anwendung der in Fig. 1 dargestellten Verbundstruktur auf eine Vorderkante eines Flügelprofils eines Luftfahrzeuges;
- Fig. 3: eine schematische vereinfachte Darstellung einer Verbundstruktur;
- Fig. 4: eine schematische Darstellung einer Verbundstruktur mit Eisschutzvorrichtung;
- Fig. 5: eine schematische Darstellung einer Verbundstruktur;
- Fig. 6: eine schematische Darstellung einer Verbundstruktur;
- Fig. 7: eine schematische Darstellung einer Ausführungsform der Verbundstruktur;
- Fig. 8: eine schematische Darstellung einer Verbundstruktur;
- Fig. 9: eine schematische Darstellung einer Verbundstruktur.

In den dargestellten Figuren sind unterschiedliche Ausführungsformen von Verbundstrukturen 10 aus Verbundmaterialien zum Bilden eines Bauteils eines Luftfahrzeuges dargestellt, welche Verbundstrukturen 10 mit einer in die Verbundstruktur eingebetteten Eisschutzvorrichtung 12 versehen sind. Die Eisschutzvorrichtung 12 ist als Vorrichtung zur Enteisung und/oder als Vorrichtung zur Vermeidung einer Eisbildung ausgebildet und dient somit dazu, die Eisbildung an Oberflächen des die Verbundstruktur 10 aufweisenden Luftfahrzeugbauteils zu vermeiden oder an solchen Oberflächen gebildetes Eis zu entfernen.

Die Eisschutzvorrichtung 12 weist ein elektrisches Heizelement 14 auf, welches elektrisch leitfähig ausgebildet ist und bei Anlegung oder Induzierung einer elektrischen Spannung, beispielsweise von dem Bordnetz des Luftfahrzeuges, über seinen elektrischen Widerstand Wärme erzeugt, die zur Erwärmung der Außenoberfläche 16 der Verbundstruktur 10 dient, um so an der Außenoberfläche 16 gebildetes Eis zu entfernen oder von vorneherein die Bildung von Eis zu vermeiden.

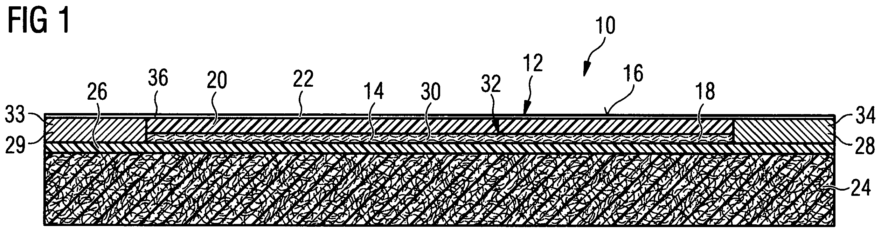

Das elektrische Heizelement 14 ist flächenartig ausgebildet, um eine Heizschicht 18 zu bilden, die unterhalb einer äußeren Deckschicht 20 der Verbundstruktür angeordnet ist. Die äußere Deckschicht 20 ist insbesondere durch einen Decklack 22 gebildet. Im Folgenden wird der Aufbau einer ersten Ausführungsform der Verbundstruktur 10 anhand der Darstellung in Fig. 1 näher erläutert.

Die in Fig. 1 dargestellte Verbundstruktur 10, der nicht Teil der Erfindung ist, hat ein Verbundmaterialsubstrat 24, welches aus einem faserverstärkten Verbundmaterial gebildet ist. Insbesondere ist das Verbundmaterialsubstrat 24 aus einem mit Kohlenstofffasern verstärkten Kunststoffmaterial gebildet. Das Kunststoffmaterial ist insbesondere Epoxidharz. Entsprechend ist das Verbundmaterialsubstrat 24 insbesondere aus CFK-Material gebildet.

Auf diesem Verbundmaterialsubstrat 24 ist eine Isolationsschicht 26 aus einem elektrisch isolierenden Material aufgetragen. Die Isolationsschicht 26 ist insbesondere aus Epoxidharz gebildet.

Zwischen dem Verbundmaterialsubstrat 24 und der Deckschicht 20 befindet sich die Heizschicht 18, welche das elektrische Heizelement 14 und Kontaktelemente 28, 29 zum elektrischen Kontaktieren des elektrischen Heizelements 14 aufweist. Das elektrische Heizelement 14 ist insbesondere aus einem textilen Flächengebilde 30 aus elektrisch leitfähigen Fasern gebildet.

Das textile Flächengebilde 30 ist bei der in Fig. 1 dargestellten Verbundstruktur 10 ein in die Verbundstruktur 10 integriertes Vlies aus elektrisch leitfähigen Fasern, insbesondere aus Kohlenstofffasern. Demnach ist bei dem elektrischen Heizelement 14 der in Fig. 1 dargestellten Ausführungsform ein Kohlenstofffaser-Vlies 32 vorgesehen, das sich bei Anlegung von Spannungen durch die Kontaktelemente 28, 29 durch den durch das Vlies 32 hindurchfließenden Strom erwärmt, um so die Außenoberfläche 16 zu erwärmen.

Die Kontaktelemente 28, 29 sind aus thermischgespritzten Kontaktstreifen 33, 34 gebildet. Der Decklack 20 ist durch eine Polyetherketon-Beschichtung gebildet. Vorzugsweise ist eine PEEK-Beschichtung 35 vorgesehen, die eine hohe thermische und mechanische Belastbarkeit und eine hohe Erosionsbeständigkeit bietet. Bei der ersten Ausführungsform weist somit die Eisschutzvorrichtung 12 ein in die Verbundstruktur 10 integriertes Vlies 32 als flächiges Heizelement 14 auf.

In die Verbundstruktur 10 können weiter noch Blitzschutzvorrichtungen eingebracht werden, beispielsweise derart, wie sie in der DE 10 2006 046 002 B4 oder dem darin zitierten Stand der Technik erläutert und gezeigt sind.

Bei nicht näher dargestellten Abwandlungen der in Fig. 1 gezeigten Verbundstruktur können die Kohlenstofffasern mit ferromagnetischen Metallen beschichtet sein, und das Heizelement 14 kann mit einer Blitzschutzstruktur kombiniert sein.

Anstelle der Kontaktierung des elektrischen Heizelements 14 mittels der Kontaktelemente 28, 29 kann das elektrische Heizelement 14 auch induktiv ohne unmittelbaren elektrischen Kontakt angesteuert werden, beispielsweise über in das Heizelement 14 induzierte Wirbelströme. Das Verbundmaterialsubstrat 24 kann anstelle der erläuterten Kohlenstofffasern auch andere Fasermaterialien zur Verstärkung enthalten. Auch kann ein anderes Matrixmaterial vorgesehen sein.

Die mit dem elektrischen Heizelement 14 versehene Verbundstruktur 10 ist zur Aufnahme einer ausreichenden Heizleistung zur Enteisung und zur Vermeidung von Eisbildung ausgelegt. Beispielsweise können wenigstens 100 W/dm² an Heizleistung eingebracht werden; die Verbundstruktur 10 ist insgesamt derart ausgelegt, dass auch entsprechende höhere Heizleistungswerte ohne Weiteres handhabbar sind.

Die in Fig. 1 dargestellte Verbundstruktur 10 ist anhand von Prototypen erfolgreich auf ihre Eignung als Eisschutzvorrichtung 12 getestet worden.

Bei einem Beispiel ist als Grundmaterial für das elektrische Heizelement 14 ein nicht gewebtes Kohlenstoffvlies 32 ausgewählt worden, das nass auf dem Verbundmaterialsubstrat 24 - gegebenenfalls unter Zwischenlage der Isolationsschicht 26 - mit Kurzfasern verlegt worden ist. In der Grundausbildung weist das Kohlenstoff-Vlies 32 eine Masse von 20 bis 40 g/m², insbesondere 30 g/m², auf und ist mit einer Dicke von 0,05 bis 0,25 mm, insbesondere 0,15 mm versehen.

Das elektrische Heizelement 14 kann sehr kleinflächig und auch großflächig verlegt werden, beispielsweise ist ein kleinflächiges Heizelement 14 mit 10 bis 20 cm, insbesondere 15 cm, Länge und 5 bis 30 cm, insbsondere 10 cm, Breite vorgesehen. Eine wirksame Heizlänge zwischen den Kontaktelementen 28, 29 kann beispielsweise 10 bis 20 cm, insbesondere 12 cm, betragen. Es kann ein Vlies mit einer Dicke von beispielsweise 15 mm in einer oder mehreren Lagen verlegt werden. Bei einer Doppellage eines solchen Vlieses ergibt sich als Beispiel für einen Querschnitt des Heizelements 14 100 mm x 0,3 mm = 30 mm².

Die Kontaktstreifen 33, 34 können beispielsweise aus Metall, wie beispielsweise Kupfer, gefertigt sein. Beispielhafte Dimensionen für Kontaktstreifen sind eine Länge von ca. 100 mm, eine Breite von ca. 15 mm und eine Dicke von ca. 0,2 mm. Alle genannten Werte sind Beispielswerte. Bevorzugte Bereiche können sich in einem Bereich von ± 50 % um diese Werte bewegen.

Zum Auftragen der Kontaktstreifen 33, 34 wird in einer bevorzugten Ausgestaltung zunächst eine Versteifung durch eine wässrige Klebstofflösung vorgesehen. Das Aufbringen der Kontaktstreifen 33, 34 kann durch Lichtbogenspritzen, Sintern, Siebdruck, PVD, CVD, Plasmaauftragung usw. geschehen. Das Bonden der Kontaktstreifen an das Verbundmaterialsubstrat 24 erfolgt z.B. durch ein Epoxidharz der Isolationsschicht 26.

Mit einem Prototyp der zuvor erläuterten Konstruktion ist bei einer Arbeitsspannung von 16 V Gleichstrom ein Stromdurchgang von 5,8 A erreicht worden. Es ist durch Tests gezeigt worden, dass das Vorsehen von Kohlenstoff-Nanoröhren in der wässrigen Klebstofflösung der Stromdurchgang um bis zu 15 % verbessert werden kann.

Als Gesamtwiderstand ist 2,75 Ω gemessen worden, wobei die Kontaktstreifen einen Widerstand von 0,2 Ω aufweisen. Damit ist eine Heizleistung von ca. 92,8 W erreicht worden, was einer Flächenleistung von 77 W/dm² entspricht. Als Aufheizzeit konnte gemessen werden, dass in ca. 30 s 40°C erreicht worden sind, wobei ein Temperaturgefälle von 30°C zu verzeichnen war.

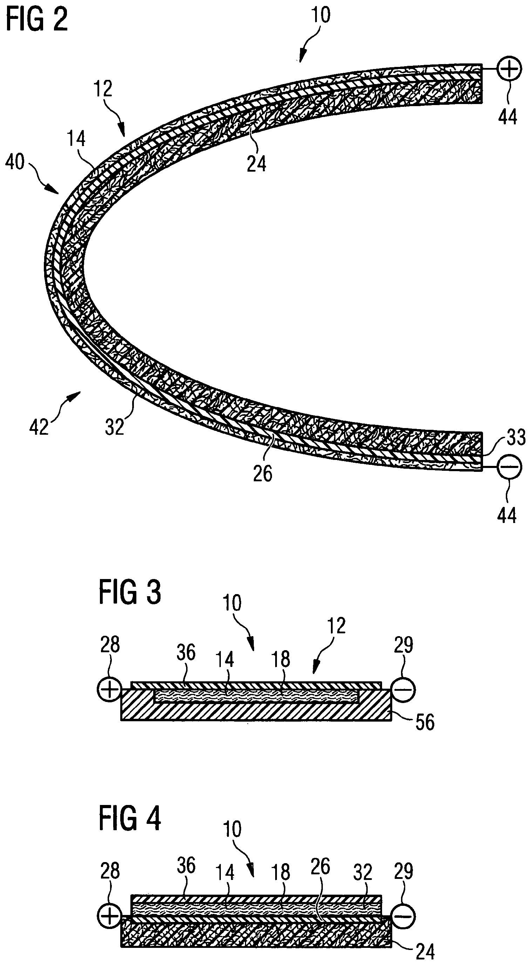

Fig. 2 zeigt die beispielsweise Anwendung der Verbundstruktur 10 an einem Flügelprofil eines nicht dargestellten Flugzeuges. In Fig. 2 ist im Querschnitt der Vorderkantenbereich 40 des Flügels 42 dargestellt. Der Flügel 42 stellt ein Beispiel für ein Luftfahrzeugbauteil dar, welches aus CFK-Verbundmaterial als tragendes Strukturelement gebildet ist. In Fig. 2 ist die Verbundstruktur 10 gezeigt, die somit den Vorderkantenbereich 40 als Strukturelement aufbaut. Das Verbundmaterialsubstrat 24 stellt dabei die tragende Komponente dar, auf der die Isolationsschicht 26 und darauf das elektrische Heizelement 14 aufgebracht ist. Beispielsweise ist als das elektrische Heizelement 14 das Kohlenstoff-Vlies 32 vorgesehen.

Die Deckschicht 20 mit dem Decklack 22 ist in Fig. 2 noch nicht dargestellt; bei Auftragen dieser Deckschicht 20 wird das Heizelement 14, welches als textiles Flächengebilde 30 aus elektrisch leitfähigen Fasern gebildet ist, fest in die Verbundstruktur 10 mit integriert und nahe der Außenoberfläche 16 angeordnet, ist aber dennoch unterhalb der Außenoberfläche 16 geschützt und integriert vorgesehen.

Anstelle des in Fig. 1 als Beispiel für das Material der Isolationsschicht 26 genannten Epoxidharzes kann auch ein Silikongel als Isolationsschicht 26 vorgesehen sein. In einem solchen Fall wäre die Eisschutzvorrichtung 12 entfernbar an dem Verbundmaterialsubstrat 24 angebracht.

Weiter ist in Fig. 2 noch die elektrische Verbindung 44 der Kontaktelemente 28, 29 an das Luftfahrzeug-Stromversorgungssystem angedeutet.

Vorteile der Eisschutzvorrichtung 12 gemäß einer oder mehreren der hier dargestellten Ausführungsformen sind z.B.:
- eine hohe elektrische Effizienz aufgrund eines außerhalb des Verbundmaterialsubstrats 24 befestigten Heizelements 14;
- eine hohe Eisschmelzkapazität;
- ein geringes Gewicht;
- das Heizelement 14 ist in die Verbundstruktur 10 integriert;
- die Heizelemente 14 können auch innerhalb der Vorderkante befestigt sein;
- das Heizelement 14 kann sich während des Fluges nicht von dem Luftfahrzeug lösen;
- die Eisschutzvorrichtung 12 ist auch für kleine Bauteile wie z.B. Staudrucksensoren anwendbar;
- die Sicherheit des Luftverkehrs wird verbessert;
- es gibt eine hohe Gestaltungsfreiheit für die Oberflächenform von Heizelementen;
- die Eisschutzvorrichtung hat keinen Einfluss auf die Luftströmung entlang des damit versehenen Luftfahrzeugbauteils, wie z.B. des Flügels 42;
- die mit der Eisschutzvorrichtung 12 versehenen Oberflächen haben eine lange Lebensdauer;
- es werden keine Enteisungsflüssigkeiten benötigt;
- die Eisschutzvorrichtung 12 ist umweltfreundlich;
- es kann eine einfache und leichtgewichtige Enteisungskontrolleinheit beispielsweise durch temperaturgesteuerte Widerstände, wie z.B NTC-Widerstände oder PTC-Widerstände bzw. Heißleiter und/oder Kaltleiter, geschaffen werden; eine derartige Kontrolleinheit lässt sich als Teil der Eisschutzvorrichtung 12 leicht integrieren;
- es kann ein sicherheitsrelevantes System mit höchsten Sicherheitsstandards geschaffen werden;
- die Herstellkosten können gering gehalten werden, da der Aufbau der Eisschutzvorrichtung 12 in den Fertigungsprozess der Verbundstruktur 10 integriert werden kann und kein weiteres zusätzliches Verfahren notwendig ist.

Im Folgenden werden noch alternative Optionen zum Aufbau der Verbundstruktur 10 anhand der Darstellungen in den Fig. 3 bis 9 näher erläutert.

Bei der in Fig. 3 dargestellten zweiten Ausführungsform ist ein Kohlenstoff-Vlies 32 als Heizelement 14 in thermoplastisches Harz, beispielsweise PPS oder PAA, eingebettet und mit der PEEK-Beschichtung 36 als Decklack 22 überdeckt. Das Kohlenstoff-Vlies 32 ist beispielsweise ein unter dem Handelsnamen SIGRATEX® erhältliches Vlies. Die thermoplastischen Harze zum Einbetten dieses Vlieses 32 sind beispielsweise unter dem Haridelsnamen FORTRON ® oder IXEF ® auf dem Markt erhältlich. Allgemein ist das Vlies 32 in ein Kunststoffmaterial 56 eingebettet.

Bei der in Fig. 4 dargestellten dritten Ausführungsform ist als Material für die Isolationsschicht 26 ein zu einem Silikongel vulkanisierendes Silikonkautschuk vorgesehen, beispielsweise das unter dem Markennamen SIL-Gel ® erhältliche Material. Demnach ist der Aufbau der Verbundstruktur 10 gemäß der in Fig. 4 dargestellten dritten Ausführungsform von unten nach oben; Verbundmaterialsubstrat 24; Isolationsschicht 26 unter Verwendung von SIL-Gel, Vlies 32 aus SIGRATEX und Decklack 22 in Form einer PEEK-Beschichtung 36.

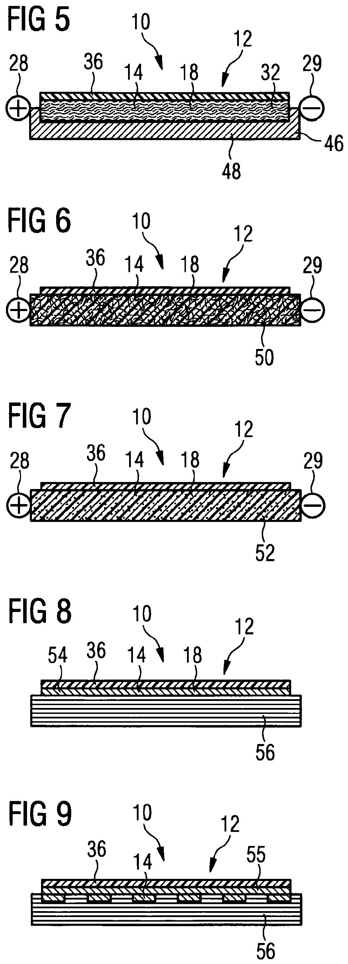

Bei der in Fig. 5 dargestellten vierten Ausführungsform der Verbundstruktur 10 ist zusätzlich unterhalb der Heizschicht 18 mit dem elektrischen Heizelement 14 noch eine Latentwärmespeichereinrichtung 46 vorgesehen. Die Latentwärmespeichereinrichtung 46 ist als Latentwärmespeicherplatte 48 aufgebildet, die durch Verwendung eines einen Phasenübergangs in dem interessierenden Temperatur aufweisenden, eingebettet Materials latent Wärme speichern kann.

Eine solche Latentwärmespeicherplatte 48 ist z.B. aus Verbundmaterial aus einem einen bei den hier in Rede stehenden Temperaturen auftretenden Phasenübergang aufweisenden Material und Kohlenstoff gebildet. Eine solche Latentwärmespeicherplatte 48 ist beispielsweise unter dem Markennamen ECOPHIT ® auf dem Markt erhältlich.

Bei der in Fig. 6 dargestellten fünften Ausführungsform ist zum Bilden des elektrischen Heizelements 14 eine elektrisch leitfähige Schicht aus faserverstärktem Material 50 vorgesehen. Die elektrisch leitfähige Schicht 50 ist beispielsweise aus einem mit Carbonfasern verstärkten Kohlenstoffmaterial, insbesondere kohlenstofffaserverstärktem Graphit, gebildet. Ein Beispiel für ein solches Material ist unter dem Handelsnamen SIGRABOND ® CFC auf dem Markt erhältlich. Diese elektrisch leitfähige Schicht 50 kann anstelle des Kohlenstoff-Vlieses 32 bei der in Fig. 1 dargestellten Verbundstruktur 10 eingesetzt werden.

Bei der in Fig. 7 dargestellten sechsten Ausführungsform ist die Verbundstruktur 10 ähnlich wie bei der fünften Ausführungsform ausgebildet, wobei anstelle der elektrisch leitfähigen Schicht 50 mit faserverstärkten Materialien eine elektrisch leitfähige Schicht 52 aus mit Graphit befülltem Hochleistungskunststoff eingesetzt ist. Beispielsweise ist ein durch Spritzgießen zu verarbeitendes graphitgefülltes Duroplast eingesetzt. Allgemein können elektrisch leitfähige thermoplastische oder heißhärtende Materialien als Heizelement 14 eingesetzt werden. Ein Beispiel für ein geeignetes Material ist unter dem Handelsnamen RIDURID ® auf dem Markt erhältlich.

Bei den in den Fig. 8 und 9 dargestellten Ausführungsformen wird die elektrische Leitfähigkeit des Heizelements 14 unter Verwendung von Kohlenstoffnanoröhren hergestellt. Durch Füllen eines Kunststoffmaterials, wie beispielsweise eines thermoplastischen Materials, mit Nanoröhren lässt sich ein elektrisch leitfähiges Kunststoffverbundmaterial erhalten. Bei der in Fig. 8 dargestellten siebten Ausführungsform ist ein solches mit Nanoröhren gefülltes elektrisch leitfähiges Kunststoffverbundmaterial 56 als elektrisch leitfähige Schicht 54 anstelle der Schichten 50, 52 der fünften und sechsten Ausführungsform als Heizelement 14 verwendet.

Bei der in Fig. 9 dargestellten achten Ausführungsform ist dieses mit Nanoröhren befülltes elektrisch leitfähiges Kunststoffverbundmaterial 56 in Zick-Zack-Form als Pfad durch eine Matrixschicht aus unbefülltem Kunststoffmaterial 55 oder unbefülltem Kunststoffverbundmaterial eingefügt. Als Kunststoffmaterialien, welche mit Nanoröhren befüllbar sind oder welches die Matrixschicht 56 bildet, kommen beispielsweise die oben bereits erwähnten PPS-Materialien, wie z.B. FORTRON ®, oder PAA-Materialien, wie beispielsweise IXEF ®, in Frage.

### Bezugszeichenliste

- 10: Verbundstruktur
- 12: Eisschutzvorrichtung
- 14: elektrisches Heizelement
- 16: Außenoberfläche
- 18: Heizschicht
- 20: Deckschicht
- 22: Decklack
- 24: Verbundmaterialsubstrat
- 26: Isolationsschicht
- 28: Kontaktelement
- 29: Kontaktelement
- 30: textiles Flächengebilde
- 32: Kohlenstoff-Vlies
- 33: Kontaktstreifen
- 34: Kontaktstreifen
- 36: PEEK-Beschichtung
- 40: Vοrderkantenbereich
- 42: Flügel
- 44: Verbindung an Luftfahrzeu-Stromversorgung
- 46: Wärmespeichereinrichtung
- 48: Latentwärmespeicherplatte
- 50: elektrisch leitfähige Schicht faserverstärkten Materials
- 52: elektrisch leitfähige Schicht aus Graphit-befülltem Kunststoff
- 54: elektrisch leitfähige Schicht aus mit Nanoröhren befülltem Thermoplast
- 55: mit Nanoröhren befülltes, leitfähiges Kunststoffmaterial
- 56: unbefülltes Kunststoffmaterial oder Kunststoffverbundmaterial

## Patentansprüche

1. Verbundstruktur (10) für ein Luftfahrzeugbauteil (42) zum Bilden eines Strukturelements eines Luftfahrzeuges mit einer in der Verbundstruktur (10) integrierten Eisschutzvorrichtung (12) zur Vermeidung einer Eisbildung und/oder zur Enteisung, wobei die Eisschutzvorrichtung (12) ein flächenhaftes elektrisches Heizelement (14) aufweist, das unterhalb einer äußeren Schicht (20) einer Außenoberfläche (16) des Luftfahrzeugbauteiles (42) in die Verbundstruktur (10) eingebettet ist, **dadurch gekennzeichnet,**
**dass** eine Latentwärmespeicherschicht (48) mit einem durch Phasenübergang latent Wärme speichernden Material vorgesehen ist.

2. Verbundstruktur (10) nach Anspruch 1,
**dadurch gekennzeichnet,**
**dass** das elektrische Heizelement (14) ausgewählt ist aus einer Gruppe von Heizelementen, die
• ein textiles Flächengebilde (30) aus elektrisch leitfähigen Fasern,
• eine leitfähige Schicht (50) aus faserverstärktem Material, insbesondere aus mit Kohlenstofffasern verstärktem Graphit,
• eine Kunststoffschicht (52), die durch ein Füllmaterial, inbesondere eine Graphitfüllung, elektrisch leitfähig gefertigt ist,
• eine leitfähige Schicht (54) aus Matrixmaterial, welches mit Nanoröhren beladen ist, und
• eine Schicht mit wenigstens einem durch die Schicht verteilt geführtem Leitpfad aus mit Nanoröhren-Befüllung leitfähig gefertigtem Kunststoff;
enthält.

3. Verbundstruktur (10) nach Anspruch 2,
**dadurch gekennzeichnet,**
**dass** das textile Flächengebilde (30) ein Kohlenstoff-Vlies (32) aufweist.

4. Verbundstruktur (10) nach einem der voranstehenden Ansprüche,
**dadurch gekennzeichnet,**
**dass** die das elektrische Heizelement (14) überlagernde äußere Schicht (20) ein Polyetherketon, insbesondere ein Polyether-Etherketon (36), enthält.

5. Verbundstruktur (10) nach einem der voranstehenden Ansprüche,
**dadurch gekennzeichnet,**
**dass** die Verbundstruktur (10) ein Verbundmaterialsubstrat (24) aus einem faserverstärkten Kunststoffmaterial, insbesondere CFK-Material, aufweist, auf welcher das Heizelement (14) aufgebracht ist.

6. Verbundstruktur (10) nach Anspruch 5,
**dadurch gekennzeichnet,**
**dass** zwischen dem Heizelement (14) und dem Verbundmaterialsubstrat (24) eine Isolationsschicht (26), insbesondere aus elektrisch isolierendem Kunststoff, mehr insbesondere aus Epoxidharz, eingefügt ist.

7. Verbundstruktur (10) nach einem der voranstehenden Ansprüche,
**dadurch gekennzeichnet,**
**dass** das Heizelement (14) über mindestens ein Kontaktelement (28, 29) elektrisch kontaktiert ist, das unterhalb einer äußeren Schicht (20) einer Außenoberfläche (16) des Luftfahrzeugbauteiles (42) in die Verbundstruktur (10) eingebettet ist.

8. Verbundstruktur (10) nach einem der voranstehenden Ansprüche,
**dadurch gekennzeichnet,**
**dass** das Heizelement (14) modular aufgebaut ist und mehrere flächenhafte Heizelemente (14) umfasst.

9. Verfahren zum Herstellen einer Eisschutzvorrichtung (12) für ein Luftfahrzeug, **gekennzeichnet durch** Einbetten eines flächigen elektrischen Heizelements (14) in eine Verbundstruktur (10) zum Bilden einer Außenhaut des Luftfahrzeugs,
**dadurch** gekennzeichnet,
dass eine Latentwärmespeicherschicht (48) mit einem **durch** Phasenübergang latent Wärme speichernden Material vorgesehen wird.

10. Verfahren nach Anspruch 9,
**gekennzeichnet durch**
Schaffen eines Verbundmaterialsubstrats (24) aus faserverstärktem Verbundmaterial, insbesondere CFK-Material,
Aufbringen einer elektrisch leitfähigen Schicht (18, 32, 50, 52, 54) zum Bilden des Heizelements (14),
Beschichten der elektrisch leitfähigen Schicht (32, 50, 52, 54) mit einer Deckschicht (20) zum Bilden der Außenoberfläche (16) des Luftfahrzeugs.

11. Verfahren nach einem der Ansprüche 9 oder 10,
**gekennzeichnet durch**
Aufbringen mindestens eines Kontaktelementes (28, 29) zur elektrischen Kontaktierung der elektrisch leitfähigen Schicht (18, 32, 50, 52, 54).

12. Verfahren nach Anspruch 10 oder 11,
dadruch gekennzeichnet,
dass die elektrisch leitfähige Schicht (18, 32, 50, 52, 54) modular aufgetragen wird.

13. Verfahren nach Anspruch 10 bis 12,
**dadurch gekennzeichnet,**
**dass** das Verbundmaterialsubstrat (24) vor dem Aufbringen der elektrisch leitfähigen Schicht (18, 32, 50, 52, 54) mit einem elektrisch isolierenden Material (26) beschichtet wird.

14. Verfahren nach einem der Ansprüche 10 bis 13,
**dadurch gekennzeichnet,**
**dass** die elektrische leitfähige Schicht (18, 32, 50, 52, 54) aus oder mit einem Material gebildet ist, das ausgewählt ist aus einer Gruppe von Materialien, die
• ein textiles Flächengebilde (32) aus elektrisch leitfähigen Fasern,
• mit Kohlenstofffasern verstärktes Graphit,
• durch Graphitfüllung elektrisch leitfähigen Kunststoff, und
• Nanotubes zum Bilden von elektrisch leitfähigen Pfaden
enthält.

## Claims

1. A composite structure (10) for an aircraft component (42) for forming a structural element of an aircraft with an ice protection device (12) integrated into the composite structure (10) for preventing a formation of ice and/or for de-icing, wherein the ice protection device (12) has a flat electrical heating element (14) embedded into the composite structure (10) underneath an outer layer (20) of an outer surface (16) of an aircraft component (42),
**characterized in that**
a latent heat storage layer (48) with a material storing heat latently by phase transition is provided.

2. The composite structure (10) according to claim 1,
**characterized in that**
the electrical heating element (14) is selected from a group of heating elements including
• a textile flat structure (30) of electrically conductive fibers,
• a conductive layer (50) made of fiber-reinforced material, in particular of carbon fiber-reinforced graphite,
• a plastic layer (52) made to be electrically conductive by a filler material, in particular by a graphite filler,
• a conductive layer (54) made of a matrix material loaded with nanotubes, and
• a layer with at least one conductive path, which is made of a plastic made to be conductive with a nanotube filling material and routed through the layer in a distributed manner.

3. The composite structure (10) according to claim 2,
**characterized in that**
the textile flat structure (30) comprises a carbon nonwoven (32).

4. The composite structure (10) according to any one of the preceding claims,
**characterized in that**
the outer layer (20) superimposed on the electrical heating element (14) contains a polyetherketone, in particular a polyether ether ketone (36).

5. The composite structure (10) according to any one of the preceding claims,
**characterized in that**
the composite structure (10) comprises a composite material substrate (24) made of a fiber reinforced plastic material, in particular a CFRP material, onto which the heating element (14) is applied.

6. The composite structure (10) according to claim 5,
**characterized in that**
an insulating layer (26), in particular made of an electrically insulating plastic, more particularly of epoxy resin, is inserted between the heating element (14) and the composite material substrate (24).

7. The composite structure (10) according to any one of the preceding claims,
**characterized in that**
the heating element (14) is electrically contacted via at least one contact member (28, 29), which is embedded into the composite structure (10) underneath an outer layer (20) of an outer surface (16) of the aircraft component (42).

8. The composite structure (10) according to any one of the preceding claims,
**characterized in that**
the heating element (14) has a modular structure and comprises a plurality of flat heating elements (14).

9. A method for producing an ice protection device (12), **characterized by** embedding a flat electrical heating element (14) into a composite structure (10) for forming an outer skin of an aircraft,
**characterized in that**
a latent heat storage layer (48) with a material storing heat latently by phase transition is provided.

10. The method according to claim 9,
**characterized by**
producing a composite material substrate (24) from fiber reinforced composite material, in particular CFRP material,
applying an electrically conductive layer (18, 32, 50, 52, 54) for forming the heating element (14),
coating the electrically conductive layer (32, 50, 52, 54) with a cover layer (20) for forming the outer surface (16) of the aircraft.

11. The method according to any one of the claims 9 or 10,
**characterized by**
applying at least one contact member (28, 29) for electrically contacting the electrically conductive layer (18, 32, 50, 52, 54).

12. The method according to claim 10 or 11,
**characterized in that**
the electrically conductive layer (18, 32, 50, 52, 54) is applied in a modular manner.

13. The method according to claim 10 to 12,
**characterized in that**
the composite material substrate (24) is coated with an electrically insulating material (26) prior to the application of the electrically conductive layer (18, 32, 50, 52, 54).

14. The method according to any one of the claims 10 to 13,
**characterized in that**
the electrically conductive layer (18, 32, 50, 52, 54) is formed from or with a material selected from a group of materials including
• a textile flat structure (32) of electrically conductive fibers,
• carbon fiber-reinforced graphite,
• plastic that is electrically conductive due to a graphite filler, and
• nanotubes for forming electrically conductive paths.

## Revendications

1. Structure composite (10) pour un composant d'aéronef (42) destinée à former un élément de structure d'un aéronef, comportant un dispositif de protection antigivre (12) intégré dans la structure composite (10) et destiné à éviter la formation de givre et/ou au dégivrage, le dispositif antigivre (12) comprenant un élément chauffant électrique surfacique (14) qui est noyé dans la structure composite (10) au-dessous d'une couche extérieure (20) d'une surface extérieure (16) du composant d'aéronef (42),
**caractérisée en ce que**
il est prévu une couche d'accumulation de chaleur latente (48) comprenant un matériau qui accumule la chaleur latente par transition de phase.

2. Structure composite (10) selon la revendication 1,
**caractérisée en ce que**
l'élément chauffant électrique (14) est choisi parmi un groupe d'éléments chauffants qui comprend
- un élément en feuille textile (30) en fibres électriquement conductrices,
- une couche conductrice (50) en matériau renforcé de fibres, en particulier en graphite renforcé de fibres de carbone,
- une couche en matière plastique (52) qui est réalisée de façon électriquement conductrice par un matériau de remplissage, en particulier un remplissage de graphite,
- une couche conductrice (54) en matériau matrice qui est chargée de nanotubes, et
- une couche pourvue d'une voie conductrice guidée en étant répartie à travers la couche et constituée en matière plastique réalisée de façon conductrice avec un remplissage de nanotubes.

3. Structure composite (10) selon la revendication 2,
**caractérisée en ce que**
l'élément en feuille textile (30) est un non-tissé en carbone (32).

4. Structure composite (10) selon l'une des revendications précédentes,
**caractérisée en ce que**
la couche extérieure (20) chevauchant l'élément chauffant électrique (14) comprend un polyéther-cétone, en particulier un polyéther-éther-cétone (36).

5. Structure composite (10) selon l'une des revendications précédentes,
**caractérisée en ce que** la structure composite (10) comprend un substrat de matériau composite (24) en une matière plastique renforcée de fibres, en particulier une matière plastique renforcée de fibres en carbone, sur lequel est déposé l'élément chauffant (14).

6. Structure composite (10) selon la revendication 5,
**caractérisée en ce qu'**une couche isolante (26), en particulier en matière plastique électriquement isolante, plus particulièrement en résine époxy, est insérée entre l'élément chauffant (14) et le substrat de matériau composite (24).

7. Structure composite (10) selon l'une des revendications précédentes,
**caractérisée en ce que**
l'élément chauffant (14) est susceptible d'être contacté électriquement par au moins un élément de contact (28, 29) qui est noyé dans la structure composite (10) au-dessous d'une couche extérieure (20) d'une surface extérieure (16) du composant d'aéronef (42).

8. Structure composite (10) selon l'une des revendications précédentes,
**caractérisée en ce que**
l'élément chauffant (14) est conçu de façon modulaire et comprend plusieurs éléments chauffants surfaciques (14).

9. Procédé de réalisation d'un dispositif de protection antigivre (12) pour un aéronef,
**caractérisé en ce que** l'on fait noyer un élément chauffant électrique surfacique (14) dans la structure composite (10) pour former une peau extérieure de l'aéronef,
**caractérisé en ce que**
on prévoit une couche d'accumulation de chaleur latente (48) comprenant un matériau qui accumule la chaleur latente par transition de phase.

10. Procédé selon la revendication 9,
**caractérisé en ce que**
on réalise un substrat en matériau composite (24) à partir d'un matériau composite renforcé de fibres, en particulier une matière plastique renforcée de fibres en carbone,
on dépose une couche électriquement conductrice (18, 32, 50, 52, 54) pour former un élément chauffant (14),
on revêt la couche électriquement conductrice (32, 50, 52, 54) d'une couche de couverture (20) pour former une surface extérieure (16) de l'aéronef.

11. Procédé selon l'une des revendications 9 ou 10,
**caractérisé en ce que**
on dépose au moins un élément de contact (28, 29) pour la mise en contact électrique de la couche électriquement conductrice (18, 32, 50, 52, 54).

12. Procédé selon la revendication 10 ou 11,
**caractérisé en ce que**
on dépose la couche électriquement conductrice (18, 32, 50, 52, 54) par voie modulaire.

13. Procédé selon la revendication 10 à 12,
**caractérisé en ce que**
avant de déposer la couche électriquement conductrice (18, 32, 50, 52, 54), on revêt le substrat en matériau composite (24) d'un matériau électriquement isolant (26).

14. Procédé selon l'une des revendications 10 à 13,
**caractérisé en ce que**
la couche électriquement conductrice (18, 32, 50, 52, 54) est formée d'un ou avec un matériau qui est choisi parmi un groupe comprenant des matériaux qui comprennent
- un élément en feuille textile (32) en fibres électriquement conductrices,
- du graphite renforcé de fibres de carbone,
- une matière plastique électriquement conductrice par un remplissage de graphite, et
- des nanotubes pour former des voies électriquement conductrices.
